# EUROPEAN PATENT APPLICATION

(11) **EP 4 395 053 A1**
(43) Date of publication of application: **03.07.2024**
(21) Application number: 22938939.0
(22) Date of filing: 26.04.2022
(51) Int. Cl.: H01M 50/543, H01M 50/531, H01M 50/204

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: WANG, Weiwei, Ningde, Fujian 352100 (CN); LIN, Chuandong, Ningde, Fujian 352100 (CN); LIN, Jiang, Ningde, Fujian 352100 (CN)
(74) Representative: Holt, Lucy Rose
(86) International application number: PCT/CN2022/089338
(87) International publication number: WO 2023/206083

(57) **Abstract**

A battery cell (10), a battery (100), and an electrical device are provided. The battery cell (10) comprises: a first electrode assembly (13), comprising a first body (131) and a first tab (132); a second electrode assembly (14), comprising a second body (141) and a second tab (142), the first body (131) and the second body (141) being arranged in a first direction; and a first connecting member (15), the first connecting member (15) being located on one side of the first electrode assembly (13) and the second electrode assembly (14) in a second direction, the second direction being perpendicular to the first direction, and a soldering part (1321) of the first tab and a soldering part (1421) of the second tab being both connected to the first connecting member (15), wherein in the first direction, a projection of the soldering part (1321) of the first tab and a projection of the soldering part (1421) of the second tab at least partially do not overlap each other. The battery cell (10) enables the soldering part (1321) of the first tab and the soldering part (1421) of the second tab to be arranged in a staggered manner when being connected to the first connecting member (15), so as to effectively reduce the mutual insertion of the first tab (132) and the second tab (142), thereby reducing the risk of pseudo soldering of the first tab (132) and the second tab (142), and effectively improving the stability of battery performance.

## Description

### Technical Field

The present application relates to the field of battery technology, and particularly to a battery cell, a battery, and a power consumption apparatus.

### Background Art

Energy conservation and emission reduction are the key to sustainable development of the automotive industry. Electric vehicles have become an important part of the sustainable development of the automotive industry due to their advantages of energy conservation and environmental protection. For electric vehicles, the battery technology is an important factor for their development.

For a battery with a tab protruding from a top, the tab is required to be bent after connection to a connecting sheet, so as to reduce the space occupied by the tab inside the secondary battery and improve the energy density of the secondary battery.

However, when the tab is connected to an adapter, the tab is prone to false welding, which seriously affects stability of battery performance.

### Summary

The present application provides a battery cell, a battery, and a power consumption apparatus, where the battery cell can effectively reduce the risk of false welding of tabs and improve the stability of battery performance.

In a first aspect, the present application provides a battery cell, including: a first electrode assembly, including a first body and a first tab; a second electrode assembly, including a second body and a second tab, where the first body and the second body are arranged in a first direction; and a first connector, where the first connector is located on one side of the first electrode assembly and the second electrode assembly in a second direction, the second direction is perpendicular to the first direction, and a welding portion of the first tab and a welding portion of the second tab are both connected to the first connector; and in the first direction, a projection of the welding portion of the first tab and a projection of the welding portion of the second tab do not overlap at least in part.

In the foregoing technical solution, the first body and the second body are arranged in the first direction, and in the first direction, the projection of the welding portion of the first tab does not overlap at least in part with the projection of the welding portion of the second tab, so that the welding portion of the first tab and the welding portion of the second tab are misaligned when connected to the first connector, which effectively reduces the degree of mutual insertion of the first tab and the second tab, thereby reducing the risk of false welding of the first tab and the second tab, alleviating an increase in internal resistance of the battery cell due to the false welding of the tabs, and effectively improving the stability of battery performance.

According to some embodiments of the present application, in the first direction, the projection of the welding portion of the first tab and the projection of the welding portion of the second tab do not overlap.

In the foregoing technical solution, in the first direction, the projection of the welding portion of the first tab and the projection of the welding portion of the second tab do not overlap, so that the welding portion of the first tab and the welding portion of the second tab can be staggered when connected to the first connector, thereby further reducing the risk of false welding of the first tab and the second tab and improving the stability of battery performance.

According to some embodiments of the present application, in the first direction, the projection of the welding portion of the first tab and the projection of the welding portion of the second tab are spaced.

In the foregoing technical solution, in the first direction, the projection of the welding portion of the first tab and the projection of the welding portion of the second tab are spaced, so that the welding portion of the first tab and the welding portion of the second tab can be staggered on the first connector when connected to the first connector and spaced at a distance on the first connector. Such a structure further reduces the possibility of overlapping of the first tab and the second tab after battery cells are assembled, thereby avoiding the problem of false welding caused by mutual insertion of the first tab and the second tab.

According to some embodiments of the present application, in a third direction, the distance between the welding portion of the first tab and the welding portion of the second tab is L, which satisfies L≥2 mm, where the third direction is perpendicular to the first direction and the second direction.

In the foregoing technical solution, the welding portion of the first tab and the welding portion of the second tab are spaced at a distance of more than 2 mm in the third direction to provide a tolerance margin for the production and assembly accuracy of the battery cell, so as to ensure that the welding portion of the first tab and the welding portion of the second tab can be completely staggered when connected to the first connector, and to avoid mutual overlapping of the first tab and the second tab.

According to some embodiments of the present application, a maximum width of the welding portion of the first tab is smaller than that of a connecting portion of the first tab; and/or a maximum width of the welding portion of the second tab is smaller than that of a connecting portion of the second tab.

In the foregoing technical solution, the first tab and/or the second tab are disposed in a shape a wide connecting portion and a narrow welding portion, where the wide connecting portion effectively ensures an overcurrent area of the tab, the narrow connecting portion facilitates misalignment of the welding portion of the first tab and the welding portion of the second tab and avoids excessive occupation of the first connector, thereby reducing size requirements of the first connector and avoiding increasing material costs of the first connector.

According to some embodiments of the present application, a ratio of the maximum width of the connecting portion of the first tab to the maximum width of the welding portion of the first tab is greater than 1.2; and/or a ratio of the maximum width of the connecting portion of the second tab to the maximum width of the welding portion of the second tab is greater than 1.2.

In the foregoing technical solution, the ratio of the maximum width of the connecting portion of the first tab to the maximum width of the welding portion of the first tab is greater than 1.2, and the ratio of the maximum width of the connecting portion of the second tab to the maximum width of the welding portion of the second tab is greater than 1.2, so as to ensure the overcurrent areas of the tabs and avoid excessive occupation of the first connector.

According to some embodiments of the present application, in the first direction, the projection of the connecting portion of the first tab and the projection of the connecting portion of the second tab overlap at least in part.

In the foregoing technical solution, in the first direction, the projection of the connecting portion of the first tab overlaps at least in part with the projection of the connecting portion of the second tab. Such a structure is conducive to shortening the distance between the first tab and the second tab in the third direction and avoiding increasing the widths of the first electrode assembly and the second electrode assembly in the third direction.

According to some embodiments of the present application, the first tab further includes a first bent portion, which connects the connecting portion of the first tab and the welding portion of the first tab; and/or the second tab further includes a second bent portion, which connects the connecting portion of the second tab and the welding portion of the second tab.

In the foregoing technical solution, the first bent portion connects the connecting portion of the first tab and the welding portion of the first tab to facilitate connection between the first tab in a bent state and the first electrode assembly; and the second bent portion connects the connecting portion of the second tab and the welding portion of the second tab to facilitate connection between the second tab in a bent state and the second electrode assembly.

According to some embodiments of the present application, the first electrode assembly further includes a third tab with opposite polarity to the first tab, and the second electrode assembly further includes a fourth tab with opposite polarity to the second tab; and the battery cell further includes a second connector, the second connector is located on one side of the first electrode assembly and the second electrode assembly in the second direction, and a welding portion of the third tab and a welding portion of the fourth tab are both connected to the second connector.

In the foregoing technical solution, the first tab and the third tab form positive and negative tabs of the first electrode assembly, the second tab and the fourth tab form positive and negative tabs of the second electrode assembly, the first tab and the second tab with the same polarity are connected to the first connector, the third tab and the fourth tab with the same polarity are connected to the second connector, both the first connector and the second connector are located on one side of the first electrode assembly and the second electrode assembly in the second direction, and the first connector and the second connector form an electric energy conduction portion of the battery cell.

According to some embodiments of the present application, in the first direction, a projection of the welding portion of the third tab and a projection of the welding portion of the fourth tab do not overlap at least in part.

In the foregoing technical solution, the projection of the welding portion of the third tab does not overlap at least in part with the projection of the welding portion of the fourth tab, so that the welding portion of the third tab and the welding portion of the fourth tab are misaligned when connected to the second connector. This structure is conducive to reducing the degree of mutual insertion of the third tab and the fourth tab, thereby reducing the risk of false welding of the third tab and the fourth tab and improving the stability of battery performance.

According to some embodiments of the present application, in the first direction, the projection of the connecting portion of the third tab and the projection of the connecting portion of the fourth tab overlap at least in part.

In the foregoing technical solution, the projection of the connecting portion of the third tab overlaps at least in part with the projection of the connecting portion of the fourth tab, which is beneficial to shortening the distance between the third tab and the fourth tab in the third direction.

According to some embodiments of the present application, the first connector and the second connector are located on the same side of the first electrode assembly and the second electrode assembly in the second direction.

In the foregoing technical solution, the first connector and the second connector are located on the same side of the first electrode assembly and the second electrode assembly in the second direction, which facilitates module formation of batteries and series and parallel connection between battery cells.

According to some embodiments of the present application, in the third direction, the first tab and the third tab are located between the second tab and the fourth tab, and the third direction is perpendicular to the first direction and the second direction.

In the foregoing technical solution, the first tab and the third tab are located between the second tab and the fourth tab, so that the first tab and the second tab are misaligned and connected to the first connector, and the third tab and the fourth tab are misaligned and connected to the second connector.

According to some embodiments of the present application, the first tab, the second tab, the third tab, and the fourth tab are sequentially arranged in the third direction, and the third direction is perpendicular to the first direction and the second direction.

In the foregoing technical solution, the first tab, the second tab, the third tab, and the fourth tab are sequentially arranged in the third direction, so that the first tab and the second tab are misaligned and connected to the first connector, and the third tab and the fourth tab are misaligned and connected to the second connector.

In a second aspect, the present application provides a battery, including the battery cell described in any of the foregoing solutions.

Due to the characteristics of the battery cell provided in the embodiments of the first aspect of the present application, the battery in this embodiment of the second aspect of the present application also has good performance.

In a third aspect, the present application provides a power consumption apparatus, including the battery described in the foregoing solution, where the battery is used for providing electrical energy.

Due to the characteristics of the battery cell provided in the embodiments of the first aspect of the present application, the power consumption apparatus in this embodiment of the third aspect of the present application also has good performance.

### Brief Description of Drawings

In order to illustrate the technical solutions in the embodiments of the present application more clearly, brief description will be made below to the drawings required in the embodiments of the present application. Apparently, the drawings described below are some embodiments of the present application only, and other drawings could be obtained based on these drawings by those of ordinary skill in the art without creative efforts.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a side cross-sectional view of a battery cell according to some embodiments of the present application;
FIG. 5 is a partially enlarged view of FIG. 4;
FIG. 6 is a side view of a first electrode assembly and a second electrode assembly in an unfolded state according to some embodiments of the present application;
FIG. 7 is a front view A of the first electrode assembly and the second electrode assembly in the unfolded state according to some embodiments of the present application;
FIG. 8 is a front view B of the first electrode assembly and the second electrode assembly in the unfolded state according to some embodiments of the present application;
FIG. 9 is a front view C of the first electrode assembly and the second electrode assembly in the unfolded state according to some embodiments of the present application; and
FIG. 10 is a front view D of the first electrode assembly and the second electrode assembly in the unfolded state according to some embodiments of the present application.

The drawings are not drawn to actual scale.

Marking description: 1000 - vehicle; 100 - battery; 10 - battery cell; 11 - end cover; 12 - shell; 13 - first electrode assembly; 131 - first body; 132 - first tab; 1321 - welding portion of the first tab; 1322 - connecting portion of the first tab; 1323 - first bent portion; 133 - third tab; 1331 - welding portion of the third tab; 1332 - connecting portion of the third tab; 14 - second electrode assembly; 141 - second body; 142 - second tab; 1421 - welding portion of the second tab; 1422 - connecting portion of the second tab; 1423 - second bent portion; 143 - fourth tab; 1431 - welding portion of the fourth tab; 1432 - connecting portion of the fourth tab; 15 - first connector; 16 - second connector; 17 - first electrode terminal; 18 - second electrode terminal; 20 - box body; 21 - first box body; 22 - second box body; 200 - controller; 300 - motor.

### Detailed Description of Embodiments

Implementations of the present application will be further described below in detail with reference to the drawings and embodiments. The detailed description of the following embodiments and the drawings are used to exemplarily illustrate principles of the present application, but cannot be used to limit the scope of the present application, that is, the present application is not limited to the described embodiments.

In the description of the present application, it should be noted that, unless otherwise specified, "plurality of" means two or more; the orientations or positional relationships indicated by the terms "upper", "lower", "left", "right", "inner", "outer", etc. are only for facilitating description of the present application and simplifying the description, but do not indicate or imply that the pointed apparatuses or elements must have specific orientations or be constructed and operated in specific orientations. Therefore, the terms should not be understood to limit the present application. In addition, the terms "first", "second", "third", etc. are for descriptive purposes only and should not be construed as indicating or implying relative importance. "Vertical" is not strictly vertical, but within an allowable range of error. "Parallel" is not strictly parallel, but within an allowable range of error.

In order to make the objectives, technical solutions and advantages of the embodiments of the present application clearer, the technical solutions in the embodiments of the present application will be described clearly and completely below in conjunction with the accompanying drawings in the embodiments of the present application. Apparently, the described embodiments are part of the embodiments of the present application, not all of them. Components in the embodiments of the present application, typically described and shown in the drawings, may be arranged and designed in various different configurations.

Therefore, detailed descriptions of the embodiments of the present application provided in the drawings below are not intended to limit the scope of protection of the present application, but only to represent the selected embodiments of the present application. All other embodiments obtained by those of ordinary skill in the art based on the embodiments of the present application without creative efforts shall fall within the scope of protection of the present application.

The following describes the embodiments of the technical solutions of the present application with reference to the drawings. The following embodiments are only used to illustrate the technical solutions of the present application, and therefore are only examples and cannot be used to limit the scope of protection of the present application.

Unless otherwise defined, all technological and scientific terms used herein have the same meanings as those commonly understood by those skilled in the art to which the present application belongs. The terms used herein are merely for the purpose of describing specific embodiments, but are not intended to limit the present application. The terms "including" and "having" and any variations thereof in the specification and claims of the present application as well as the brief description of the drawings described above are intended to cover non-exclusive inclusion.

In the description of the embodiments of the present application, the terms "first", "second", and the like are only used to distinguish different objects and cannot be understood as indicating or implying relative importance or implying the quantity, specific order, or primary and secondary relation of the indicated technical features. In the description of the embodiments of the present application, "a plurality of" means two or more, unless otherwise specified.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the description of the embodiments of the present application, the term "a plurality of" means two (inclusive) or more.

In the description of the embodiments of the present application, an orientation or positional relationship indicated by the technical term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the drawings, and is merely for ease of describing the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the technical terms "set", "mounted", "connected", "connection", "fixed", and the like should be understood broadly. For example, the term "connection" may be a fixed connection, a detachable connection, an integration, a mechanical connection, an electrical connection, a signal connection, a direct connection, an indirect connection through a medium, or an internal communication of two elements, or an interaction between two elements. Those of ordinary skill in the art may appreciate the specific meanings of the foregoing terms in the embodiments of the present application to specific circumstances.

In the embodiments of the present application, the same reference numerals represent the same components, and for simplicity, detailed descriptions of the same components are omitted in different embodiments. It should be understood that dimensions such as thickness, length and width of various components and dimensions such as overall thickness, length and width of integrated apparatuses in the embodiments of the present application shown in the drawings are merely illustrative examples and should not constitute any limitations on the present application.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be flat, cuboid, or in other shapes, which is also not limited by the embodiments of the present application.

The battery mentioned in the embodiments of the present application refers to a single physical module that includes one or more battery cells to provide a higher voltage and capacity. For example, the battery mentioned in the present application may include a battery module or a battery pack. A plurality of battery cells may be connected in series, parallel, or series and parallel to directly form the battery. The series and parallel connection refers to both series and parallel connection in the plurality of battery cells. A plurality of battery cells may alternatively be first connected in series, parallel, or series and parallel to form a battery cell module, and then a plurality of battery cell modules are connected in series, parallel, or series and parallel to form the battery. The battery may include a box body for packaging one or more battery cells. The box body may prevent liquid or other foreign matters from affecting the charging or discharging of the battery cells.

The battery cell includes an electrode assembly and an electrolyte, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the positive electrode current collector not coated with the positive electrode active material layer protrudes from the positive electrode current collector coated with the positive electrode active material layer and is used as a positive tab. In an example of a lithium-ion battery, a material of the positive electrode current collector may be aluminum, and a positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer and is used as a negative tab. A material of the negative electrode current collector may be copper, and a negative electrode active material may be carbon, silicon, or the like. In order to ensure that no fusing occurs when a large current passes through, there are a plurality of positive tabs which are stacked together and a plurality of negative tabs which are stacked together. A material of the separator may be polypropylene (PP), polyethylene (PE), or the like. In addition, the electrode assembly may be of a winding structure or a laminated structure, and the embodiments of the present application are not limited thereto.

The development of battery technology needs to progress from multiple aspects, such as discharge capacity and energy density. For a battery with a tab protruding from a top, the tab is required to be bent after being connected to a connecting sheet, so as to reduce the space occupied by the tab inside the secondary battery and improve the energy density of the secondary battery.

In some technologies, in order to improve the energy density of a battery cell, a plurality of electrode assemblies are usually arranged in the battery cell, and tabs of the plurality of electrode assemblies with the same polarity are folded and connected to the same adapter to connect electrode terminals and the tabs through the adapter.

The inventor noticed that, when the tabs are connected to the adapter, the tabs are prone to false welding, which increases internal resistance of the battery cell and affects stability of battery performance. It was found by analyzing reasons that, during battery assembly, tab ends of two electrode assemblies are required to be disposed opposite, tabs with the same polarity are extended in opposite directions and connected to the same connector in a thickness direction of the electrode assemblies, then the tabs are bent to juxtapose the two electrode assemblies, and the tabs of the two electrode assemblies that extend in the opposite directions are easily inserted in each other, which easily causes false welding of the tabs to affect the stability of battery performance.

In order to solve the problem of mutual insertion of tabs, the applicant has found through research that redundant portions of the tabs may be cut by a cutting process to reduce lengths of the tabs, so as to prevent mutual contact and insertion of the tabs. However, multi-layer stacked tabs are prone to burrs after cutting, which easily causes failure of the battery cell and also affects the stability of battery performance. In addition, the process chain is long, which is not conducive to improving battery production efficiency and reducing production costs.

Based on the above problems, in order to reduce the risk of false welding caused by mutual insertion of tabs, the applicant provides a battery cell. The battery cell of the present application includes a first electrode assembly, a second electrode assembly and a connector, where the first electrode assembly includes a first body and a first tab, the second electrode assembly includes a second body and a second tab, the first body and the second body are arranged in a first direction, a projection of a welding portion of the first tab and a projection of a welding portion of the second tab do not overlap at least in part in the first direction, and both the welding portion of the first tab and the welding portion of the second tab are connected to the first connector.

In such a battery cell, the welding portion of the first tab and the welding portion of the second tab are misaligned when connected to the first connector, which is beneficial to reducing the degree of mutual insertion of the first tab and the second tab, thereby reducing the risk of false welding of the first tab and the second tab and improving the stability of battery performance; and because the welding portion of the first tab and the welding portion of the second tab are misaligned when connected to the first connector, a pre-welding cutting device is not required to cut step redundant portions of the first tab and the second tab, thereby avoiding the generation of burrs on the tabs to cause failure of the battery cell, simplifying the process, effectively reducing production costs, and improving production efficiency.

The battery cell disclosed in the embodiments of the present application may be used, but is not limited to, in a power consumption device such as a vehicle, a ship or an aircraft. The battery cell disclosed in the present application may be used to form a power system of the power consumption device.

An embodiment of the present application provides a power consumption apparatus using a battery as a power supply. The power consumption apparatus may be, but is not limited to, a mobile phone, a tablet computer, a notebook computer, an electric toy, an electric tool, a scooter, an electric vehicle, a ship, a spacecraft, or the like. The electric toy may include fixed or mobile electric toys, such as game consoles, electric vehicle toys, electric ship toys and electric aircraft toys, and the spacecraft may include airplanes, rockets, space shuttles, spaceships, and the like.

The battery described in the embodiments of the present application is not only applicable to the power consumption apparatuses described above, but may also be applicable to all power consumption apparatuses using batteries. However, for the sake of simplicity, the following embodiments are described by an example of a vehicle as a power consumption apparatus in an embodiment of the present application.

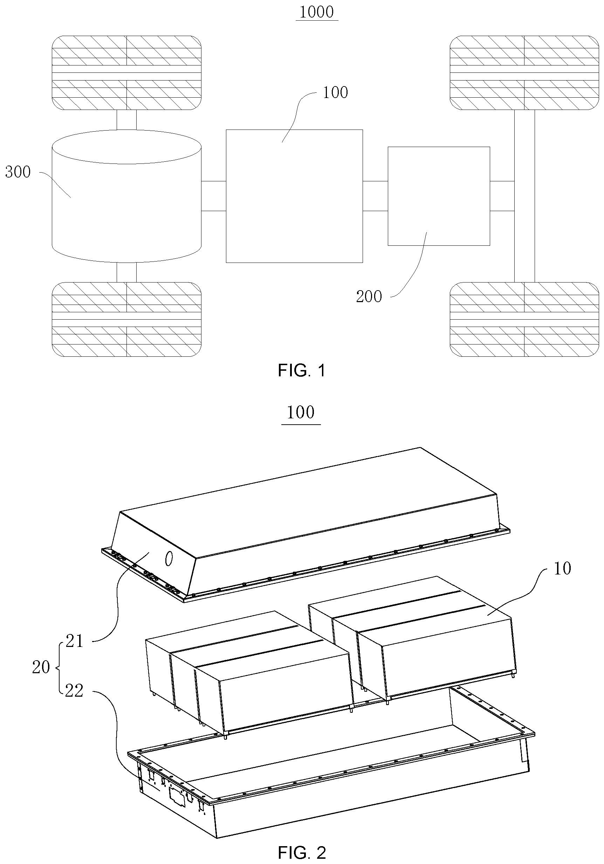

Refer to FIG. 1. FIG. 1 is a schematic structural diagram of a vehicle 1000 according to some embodiments of the present application. The vehicle 1000 may be a fuel-powered vehicle, a gas-powered vehicle or a new energy vehicle, and the new energy vehicle may be a battery electric vehicle, a hybrid vehicle, an extended-range vehicle, or the like. A battery 100 is provided inside the vehicle 1000. The battery 100 may be disposed at the bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for the working power demand of the vehicle 1000 during startup, navigation and running.

In other embodiments, the battery 100 may be used not only as an operation power supply of the vehicle 1000, but also as a driving power supply of the vehicle 1000 to replace or partially replace fuel or natural gas to provide driving power for the vehicle 1000.

FIG. 2 shows an exploded view of a battery according to some embodiments of the present application. The battery 100 includes a plurality of battery cells 10 and a box body 20, where the plurality of battery cells 10 are placed inside the box body 20. The box body 20 includes a first box body 21 and a second box body 22, the first box body 21 and the second box body 22 cover each other to form a battery cavity, and a plurality of battery modules are placed in the cavity of the battery 100. Shapes of the first box body 21 and the second box body 22 may be determined by a combined shape of the plurality of battery modules, and both the first box body 21 and the second box body 22 may have an opening. For example, the first box body 21 and the second box body 22 may both be hollow cuboid and each has only one opening surface. The openings of the first box body 21 and the second box body 22 are disposed opposite, and the first box body 21 and the second box body 22 are buckled with each other to form the box body 20 with a closed chamber. The plurality of battery cells 10 are connected with each other in parallel, series, or series and parallel and then placed inside the box body 20 formed by buckling the first box body 21 and the second box body 22.

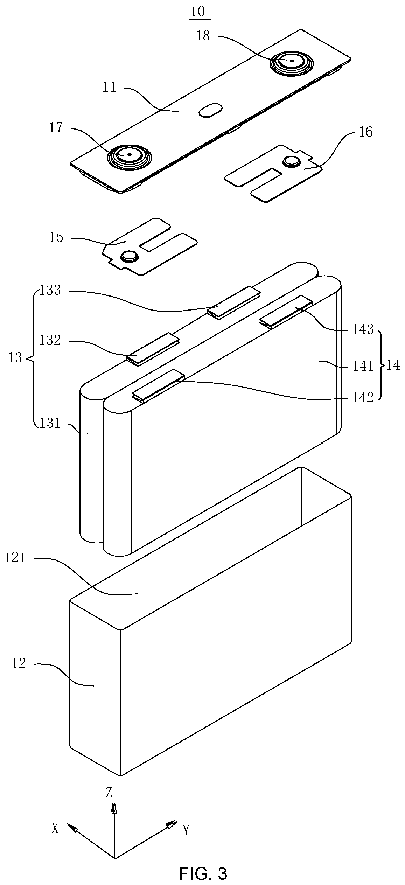

FIG. 3 shows an exploded view of a battery cell 10 according to some embodiments of the present application. The battery cell 10 includes a shell 12, an end cover 11, an electrode assembly, and electrode terminals.

The end cover 11 refers to a component that is closed to an opening of the shell 12 to isolate an internal environment of the battery cell 10 from an external environment. Unlimitedly, a shape of the end cover 11 may adapt to a shape of the shell 12 to fit the shell 12. In some embodiments, the end cover 11 may be made of a material with certain hardness and strength (such as aluminum alloy). In this case, the end cover 11 is less prone to deformation during extrusion and collision, so that the battery cell 10 can have higher structural strength. A pressure relief mechanism may be further disposed on the end cover 11 to release internal pressure when the internal pressure or temperature of the battery cell 10 reaches a threshold. A material of the end cover 11 may be various, such as copper, iron, aluminum, stainless steel, aluminum alloy, or plastic, and is not specially limited in the embodiments of the present application.

The shell 12 is a component used for mating with the end cover 11 to form the internal environment of the battery cell 10, where the formed internal environment may be used for accommodating the electrode assembly, an electrolyte and other components. The shell 12 and the end cover 11 may be independent components, the shell 12 may be provided with an opening, and the end cover 11 covers the opening to form the internal environment of the battery cell 10. Unlimitedly, the end cover 11 and the shell 12 may be integrated. Specifically, the end cover 11 and the shell 12 may form a common connection surface before other components are put in the shell. When the interior of the shell 12 is required to be encapsulated, the end cover 11 is closed to the shell 12. The shape of the shell 12 may be determined according to a specific shape and size of the electrode assembly. A material of the shell 12 may be various, such as copper, iron, aluminum, stainless steel, aluminum alloy, or plastic, and is not specially limited in the embodiments of the present application.

The electrode assembly is a component that undergoes electrochemical reactions in the battery cell 10. One or more electrode assemblies may be contained in the shell 12. The electrode assembly is mainly formed by coiling or stacking a positive electrode sheet and a negative electrode sheet, and a separator is usually disposed between the positive electrode sheet and the negative electrode sheet. A body of the electrode assembly includes portions of the positive electrode sheet and the negative electrode sheet with active materials and the separator, while portions of the positive electrode sheet and the negative electrode sheet without active materials form respective tabs. The positive tab and the negative tab may be located at one end of the body together or at two ends of the body separately. In charging and discharging processes of the battery 100, the positive electrode active material and the negative electrode active material react with an electrolyte, and the tabs are connected to the electrode terminals through connecting components to form a current circuit.

The electrode terminals are disposed on the end cover 11 and may include a first electrode terminal 17 and a second electrode terminal 18. The first electrode terminal 17 and the second electrode terminal 18 are electrically connected to the positive tab and the negative tab of the electrode assembly through a connecting component separately, to output or input electrical energy of the battery cell 10.

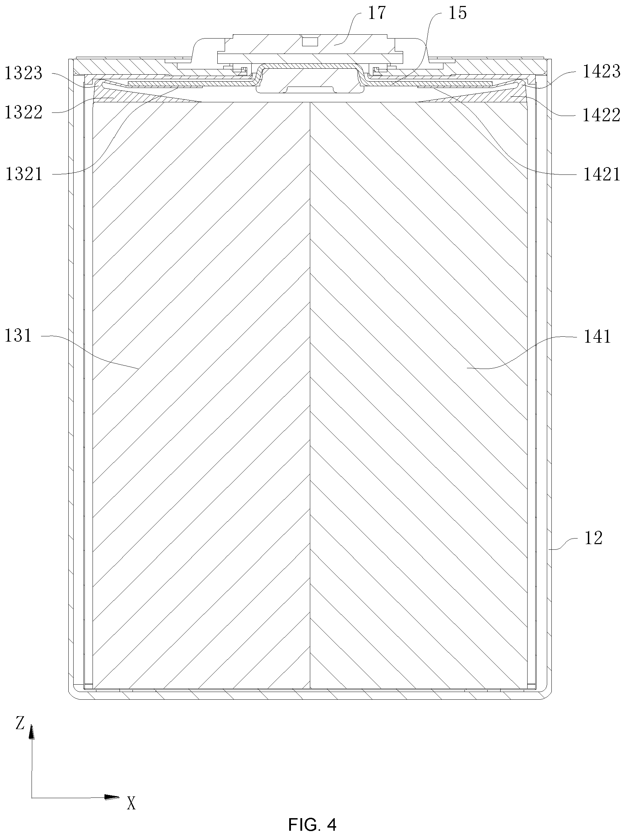

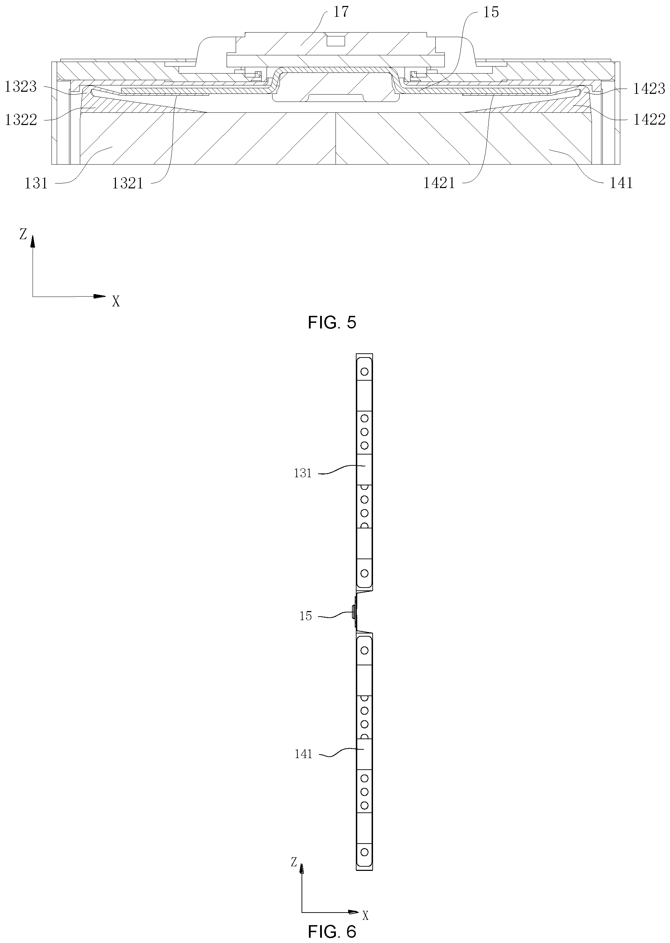

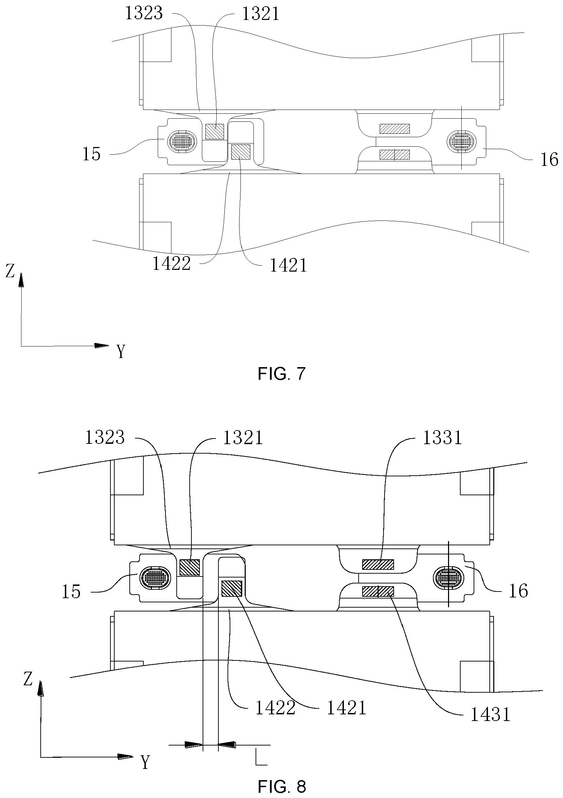

According to some embodiments of the present application, refer to FIG. 3 and further refer to FIGs. 4 to 7, where FIG. 4 is a side cross-sectional view of a battery cell according to some embodiments of the present application, FIG. 5 is a partially enlarged view of FIG. 4, FIG. 6 is a side view of a first electrode assembly and a second electrode assembly in an unfolded state according to some embodiments of the present application, and FIG. 7 is a front view A of the first electrode assembly and the second electrode assembly in the unfolded state according to some embodiments of the present application. The present application provides a battery cell 10. The battery cell 10 includes a first electrode assembly 13, a second electrode assembly 14 and a first connector 15, the first electrode assembly 13 includes a first body 131 and a first tab 132, and the second electrode assembly 14 includes a second body 141 and a second tab 142. The first body 131 and the second body 141 are arranged in a first direction, the first connector 15 is located on one side of the first electrode assembly 13 and the second electrode assembly 14 in a second direction, the second direction is perpendicular to the first direction, and a welding portion 1321 of the first tab and a welding portion 1421 of the second tab are both connected to the first connector 15. In the first direction, a projection of the welding portion 1321 of the first tab and a projection of the welding portion 1421 of the second tab do not overlap at least in part.

Specifically, the first body 131 and the second body 141 are arranged in the first direction X, and the first connector 15 is located on one side of the first electrode assembly 13 and the second electrode assembly 14 in the second direction Z.

The first connector 15 is a conductive component for electrically connecting the tabs and electrode terminals of the battery cell 10, so as to transmit electrical energy from the electrode assemblies to the electrode terminals, and then to the outside of the battery cell 10 via the electrode terminals. The first connector 15 may include a first surface, the first surface faces the first electrode assembly 13 and the second electrode assembly 14, and the welding portion 1321 of the first tab and the welding portion 1421 of the second tab may both be connected to the first surface.

It may be understood that the welding portion 1321 of the first tab refers to a portion, welded to the first connector 15, of the first tab 132, and the welding portion 1421 of the second tab refers to a portion, welded to the first connector 15, of the second tab 142. In some embodiments, the welding portion 1321 of the first tab may be located at a head of the first tab 132, and correspondingly, the welding portion 1421 of the second tab may be located at a head of the second tab 142.

In the first direction X, the projection of the welding portion 1321 of the first tab and the projection of the welding portion 1421 of the second tab do not overlap at least in part, that is, the welding portion 1321 of the first tab and the welding portion 1421 of the second tab are not completely aligned in the first direction X. In this case, when the welding portion 1321 of the first tab and the welding portion 1421 of the second tab are jointly connected to the first connector 15, the risk of mutual insertion of the first tab 132 and the second tab 142 can be effectively reduced.

The battery cell 10 in this embodiment of the present application is beneficial to reducing the degree of mutual insertion of the first tab 132 and the second tab 142, thereby reducing the risk of false welding of the first tab 132 and the second tab 142 and improving the stability of performance of the battery 100; and because the misalignment of the welding portion 1321 of the first tab and the welding portion 1421 of the second tab when connected to the first connector 15 can effectively alleviate the problem of false welding of the tabs, a pre-welding cutting device is not required to cut redundant portions of the first tab 132 and the second tab 142, thereby avoiding the generation of burrs on the tabs to cause failure of the battery cell 10, simplifying the process, effectively reducing production costs, and improving production efficiency.

According to some embodiments of the present application, in the first direction X, the projection of the welding portion 1321 of the first tab and the projection of the welding portion 1421 of the second tab do not overlap.

That is, the welding portion 1321 of the first tab and the welding portion 1421 of the second tab are completely staggered in the first direction X. This structure enables the welding portion 1321 of the first tab and the welding portion 1421 of the second tab to be completely staggered on the first connector 15 when welded to the first connector 15, which effectively avoids mutual insertion of the welding portion 1321 of the first tab and the welding portion 1421 of the second tab, thereby further reducing the risk of false welding of the first tab 132 and the second tab 142, and improving the stability of performance of the battery 100.

According to some embodiments of the present application, as shown in FIG. 8, which is a front view B of the first electrode assembly and the second electrode assembly in the unfolded state according to some embodiments of the present application, the projection of the welding portion 1321 of the first tab and the projection of the welding portion 1421 of the second tab are spaced in the first direction X.

That is, in the first direction X, there is a gap between the projection of the welding portion 1321 of the first tab and the projection of the welding portion 142 of the second tab.

The welding portion 1321 of the first tab and the welding portion 1421 of the second tab can be staggered on the first connector 15 when welded to the first connector 15 and spaced at a distance on the first connector 15, which avoids mutual contact between the welding portion 1321 of the first tab and the welding portion 1421 of the second tab, thereby avoiding a problem of false welding of tabs due to mutual insertion of the first tab 132 and the second tab 142.

According to some embodiments of the present application, with continued reference to FIG. 8, in a third direction Y, the distance between the welding portion 1321 of the first tab and the welding portion 1421 of the second tab is L, which satisfies L≥2 mm, where the third direction Y is perpendicular to the first direction X and the second direction Z.

Specifically, the third direction extends in a direction indicated by Y in the figure, and the third direction Y is perpendicular to the first direction X and the second direction Z.

The welding portion 1321 of the first tab and the welding portion 1421 of the second tab are spaced at a distance of more than 2 mm in the third direction Y to provide a tolerance margin for the production and assembly accuracy of the battery cell 10, so as to ensure that the welding portion 1321 of the first tab and the welding portion 1421 of the second tab can be completely staggered when connected to the first connector 15, and to avoid mutual overlapping of the first tab 132 and the second tab 142.

According to some embodiments of the present application, a maximum width of the welding portion 1321 of the first tab is smaller than that of a connecting portion 1322 of the first tab; and/or a maximum width of the welding portion 1421 of the second tab is smaller than that of a connecting portion 1422 of the second tab.

The connecting portion 1322 of the first tab refers to a portion, near the first body 131, of the first tab 132, and the connecting portion 1322 of the first tab connects the first body 131 and the welding portion 1321 of the first tab. The connecting portion 1422 of the second tab refers to a portion, near the second body 141, of the second tab 142, and the connecting portion 1422 of the second tab connects the second body 141 and the welding portion 1421 of the second tab. In some embodiments, the connecting portion 1322 of the first tab may be understood as a root of the first tab 132, and correspondingly, the connecting portion 1422 of the second tab may be understood as a root of the second tab 142.

There is a plurality of implementation structures in which the maximum width of the welding portion 1321 of the first tab is smaller than that of the connecting portion 1322 of the first tab, for example, the first tab 132 may be L-shaped, triangular, convex, or other irregular structures. Similarly, there is a plurality of implementation structures in which the maximum width of the welding portion 1421 of the second tab is smaller than that of the connecting portion 1422 of the second tab, for example, the second tab 142 may be L-shaped, triangular, convex, or other irregular structures.

As an example, as shown in FIG. 8, the first tab 132 may have a structure similar to a convex shape, the welding portion 1321 of the first tab is located at a top area of the convex structure, the connecting portion 1322 of the first tab forms a bottom area of the convex structure, and the width of the connecting portion 1322 of the first tab gradually decreases in a direction of the first body 131 pointing to the welding portion 1321 of the first tab until the width is equal to the width of the welding portion 1321 of the first tab. This shape effectively ensures the stiffness and deflection of the first tab 132, and has strong folding resistance.

The first tab 132 is disposed in a shape where the maximum width of the connecting portion 1322 of the first tab is greater than that of the welding portion 1321 of the first tab, the wider connecting portion 1322 of the first tab effectively ensures an overcurrent area of the first tab 132, and the narrower welding portion 1321 of the first tab facilitates misalignment of the welding portion 1321 of the first tab and the welding portion 1421 of the second tab to avoid excessive occupation of the first connector 15, thereby reducing size requirements of the first connector 15 and avoiding increasing material costs of the first connector 15.

Similarly, the second tab 142 may also have a structure similar to a convex shape, the welding portion 1421 of the second tab is located at a top area of the convex structure, the connecting portion 1422 of the second tab forms a bottom area of the convex structure, and the width of the connecting portion 1422 of the second tab gradually decreases in a direction of the second body 141 pointing to the welding portion 1421 of the second tab until the width is equal to the width of the welding portion 1421 of the second tab. This shape effectively ensures the stiffness and deflection of the second tab 142, and has strong folding resistance.

The second tab 142 is disposed in a shape where the maximum width of the connecting portion 1422 of the second tab is greater than that of the welding portion 1421 of the second tab, the wider connecting portion 1422 of the second tab effectively ensures an overcurrent area of the second tab 142, and the narrower welding portion 1421 of the second tab facilitates misalignment of the welding portion 1321 of the first tab and the welding portion 1421 of the second tab to avoid excessive occupation of the first connector 15, thereby reducing size requirements of the first connector 15 and avoiding increasing material costs of the first connector 15.

According to some embodiments of the present application, a ratio of the maximum width of the connecting portion 1322 of the first tab to the maximum width of the welding portion 1321 of the first tab is greater than 1.2; and/or a ratio of the maximum width of the connecting portion 1422 of the second tab to the maximum width of the welding portion 1421 of the second tab is greater than 1.2.

The ratio of the maximum width of the connecting portion 1322 of the first tab to the maximum width of the welding portion 1321 of the first tab may be any value greater than 1.2, such as 1.3, 1.35, or 1.4. For example, the ratio of the maximum width of the connecting portion 1322 of the first tab to the maximum width of the welding portion 1321 of the first tab may be 1.5.

Similarly, a ratio of the maximum width of the connecting portion 1422 of the second tab to the maximum width of the welding portion 1421 of the second tab may be any value greater than 1.2, such as 1.3, 1.35, or 1.4. The ratio of the maximum width of the connecting portion 1422 of the second tab to the maximum width of the welding portion 1421 of the second tab may be the same as or different from the ratio of the maximum width of the connecting portion 1322 of the first tab to the maximum width of the welding portion 1321 of the first tab. For example, the ratio of the maximum width of the connecting portion 1422 of the second tab to the maximum width of the welding portion 1421 of the second tab may also be 1.5.

The ratio of the maximum width of the connecting portion 1322 of the first tab to the maximum width of the welding portion 1321 of the first tab is greater than 1.2, which may ensure the overcurrent area of the first tab 132 and avoiding excessive occupation of the first connector 15. Similarly, the ratio of the maximum width of the connecting portion 1422 of the second tab to the maximum width of the welding portion 1421 of the second tab is greater than 1.2, which may ensure the overcurrent area of the second tab 142 and avoid excessive occupation of the first connector 15.

According to some embodiments of the present application, in the first direction X, the projection of the connecting portion 1322 of the first tab and the projection of the connecting portion 1422 of the second tab overlap at least in part.

As shown in FIG. 8, in the first direction X, the projection of the connecting portion 1322 of the first tab overlaps at least in part with the projection of the connecting portion 1422 of the second tab. Of course, in other embodiments, the projection of the connecting portion 1322 of the first tab may completely overlap with the projection of the connecting portion 1422 of the second tab. In actual production of the battery 100, the first electrode assembly 13 and the second electrode assembly 14 with identical structure and shape may be produced. Then, the first tab 132 and the second tab 142 are cut to form the welding portion 1321 of the first tab and the welding portion 1421 of the second tab.

In the first direction X, the projection of the connecting portion 1322 of the first tab overlaps at least in part with the projection of the connecting portion 1422 of the second tab. Such a structure is conducive to shortening the distance between the first tab 132 and the second tab 142 in the third direction Y, so that the structure of the overall battery cell 10 is more compact and an increase in the size of the first connector in the third direction Y is avoided.

According to some embodiments of the present application, with reference to FIG. 4 and FIG. 5 again, the first tab 132 further includes a first bent portion 1323, which connects the connecting portion 1322 of the first tab and the welding portion 1321 of the first tab; and/or the second tab 142 further includes a second bent portion 1423, which connects the connecting portion 1422 of the second tab and the welding portion 1421 of the second tab.

In the assembly process of the battery cell 10, the welding portion 1321 of the first tab may be bent after connected to the first connector 15, and the bent portion of the first tab 132 forms the first bent portion 1323, which connects the connecting portion 1322 of the first tab and the welding portion 1321 of the first tab. Similarly, the welding portion 1421 of the second tab may be bent after connected to the first connector 15, and the bent portion of the second tab 142 forms the second bent portion 1423, which connects the connecting portion 1422 of the second tab and the welding portion 1421 of the second tab.

The first bent portion connects the connecting portion 1322 of the first tab and the welding portion 1321 of the first tab to facilitate bending of the first tab 132; and the second bent portion connects the connecting portion 1422 of the second tab and the welding portion 1421 of the second tab to facilitate bending of the second tab 142.

According to some embodiments of the present application, as shown in FIG. 8, the first electrode assembly 13 further includes a third tab 133 with opposite polarity to the first tab 132, and the second electrode assembly 14 further includes a fourth tab 143 with opposite polarity to the second tab 142; and the battery cell 10 further includes a second connector 16, the second connector 16 is located on one side of the first electrode assembly 13 and the second electrode assembly 14 in the second direction Z, and a welding portion 1331 of the third tab and a welding portion 1431 of the fourth tab are both connected to the second connector 16.

That is, if the first tab 132 is the positive tab of the first electrode assembly 13, the third tab 133 is the negative tab of the first electrode assembly 13, and vice versa. Similarly, if the second tab 142 is the positive tab of the second electrode assembly 14, the fourth tab 143 is the negative tab of the second electrode assembly 14, and vice versa.

The welding portion 1331 of the third tab refers to a portion, welded to the second connector 16, of the third tab 133, and the welding portion 1431 of the fourth tab refers to a portion, welded to the second connector 16, of the fourth tab 143. In some embodiments, the welding portion 1331 of the third tab may be located at a head of the third tab 133, and correspondingly, the welding portion 1431 of the fourth tab may be located at a head of the fourth tab 143.

The second connector 16 has the same function as the first connector 15. The second connector 16 is a conductive component for electrically connecting the tabs and electrode terminals of the battery cell 10, so as to transmit electrical energy from the electrode assemblies to the electrode terminals, and then to the outside of the battery cell 10 via the electrode terminals. The second connector 16 may include a second surface, the second surface faces the first electrode assembly 13 and the second electrode assembly 14, and the welding portion 1331 of the third tab and the welding portion 1431 of the fourth tab may both be connected to the second surface.

The second connector 16 and the first connector 15 may be located on the same side of the first electrode assembly 13 and the second electrode assembly 14 in the second direction, or on two opposite sides of the first electrode assembly 13 and the second electrode assembly 14 separately in the second direction. It may be understood that when, the second connector 16 and the first connector 15 are located on the same side of the first electrode assembly 13 and the second electrode assembly 14 in the second direction, the first tab 132, the third tab 133, the second tab 142 and the fourth tab 143 may all be located on the same side of the first electrode assembly 13 and the second electrode assembly 14 in the second direction; and when the second connector 16 and the first connector 15 are located on two opposite sides of the first electrode assembly 13 and the second electrode assembly 14 separately in the second direction, the first tab 132 and the third tab 133 are located on two opposite sides of the first body 131 in the second direction Z, and the second tab 142 and the fourth tab 143 are located on two opposite sides of the second body 141 in the second direction Z.

The first tab 132 and the third tab 133 form positive and negative tabs of the first electrode assembly 13, the second tab 142 and the fourth tab 143 form positive and negative tabs of the second electrode assembly 14, the first tab 132 and the second tab 142 with the same polarity are connected to the first connector 15, the third tab 133 and the fourth tab 143 with the same polarity are connected to the second connector 16, both the first connector 15 and the second connector 16 are located on one side of the first electrode assembly 13 and the second electrode assembly 14 in the second direction, and the first connector 15 and the second connector 16 form an electric energy conduction portion of the battery cell 10.

According to some embodiments of the present application, in the first direction X, a projection of the welding portion 1331 of the third tab and a projection of the welding portion 1431 of the fourth tab do not overlap at least in part.

Specifically, the welding portion 1331 of the third tab and the welding portion 1431 of the fourth tab are not completely aligned in the first direction X. In this case, when the welding portion 1331 of the third tab and the welding portion 1431 of the fourth tab are jointly connected to the second connector 16, the risk of mutual insertion of the third tab 133 and the fourth tab 143 can be effectively reduced.

The projection of the welding portion 1331 of the third tab does not overlap at least in part with the projection of the welding portion 1431 of the fourth tab, so that the welding portion 1331 of the third tab and the welding portion 1431 of the fourth tab are misaligned when connected to the second connector 16. This structure is conducive to reducing the degree of mutual insertion of the third tab 133 and the fourth tab 143, thereby reducing the risk of false welding of the third tab 133 and the fourth tab 143 and improving the stability of performance of the battery 100.

Of course, in the first direction X, the projection of the welding portion 1331 of the third tab and the projection of the welding portion 1431 of the fourth tab may alternatively be spaced. That is, in the first direction X, there is a gap between the projection of the welding portion 1331 of the third tab and the projection of the welding portion 1431 of the fourth tab. This structure avoids mutual contact between the welding portion 1331 of the third tab and the welding portion 1431 of the fourth tab, thereby avoiding a problem of false welding of tabs due to mutual insertion of the third tab 133 and the fourth tab 143.

Similarly, in the third direction Y, the welding portion 1331 of the third tab and the welding portion 1431 of the fourth tab may alternatively be spaced at a distance of more than 2 mm to provide a tolerance margin for the production and assembly accuracy of the battery cell 10, so as to ensure that the welding portion 1331 of the third tab and the welding portion 1431 of the fourth tab can be completely staggered when connected to the second connector 16.

According to some embodiments of the present application, in the first direction X, the projection of the connecting portion 1332 of the third tab and the projection of the connecting portion 1432 of the fourth tab overlap at least in part.

Corresponding to the structure and principle of the first tab 132 and the second tab 142, the connecting portion 1332 of the third tab 133 refers to a portion, near the first body 131, of the third tab 133, and the connecting portion 1332 of the third tab connects the first body 131 and the welding portion 1331 of the third tab. The connecting portion 1432 of the fourth tab refers to a portion, near the second body 141, of the fourth tab 143, and the connecting portion 1432 of the fourth tab connects the second body 141 and the welding portion 1431 of the fourth tab. In some embodiments, the connecting portion 1332 of the third tab may be a root of the third tab 133, and the connecting portion 1432 of the fourth tab may be a root of the fourth tab 143.

The projection of the connecting portion 1332 of the third tab overlaps at least in part with the projection of the connecting portion 1432 of the fourth tab, which is beneficial to shortening the distance between the third tab 133 and the fourth tab 143 in the third direction, so that the structure of the battery cell 10 is more compact.

According to some embodiments of the present application, the first connector 15 and the second connector 16 are located on the same side of the first electrode assembly 13 and the second electrode assembly 14 in the second direction Z.

The first connector 15 and the second connector 16 are located on the same side of the first electrode assembly 13 and the second electrode assembly 14 in the second direction Z, and the first tab 132, the second tab 142, the third tab 133 and the fourth tab 143 may all be located on the same side of the first body 131 and the second body 141 in the second direction Z to facilitate connection with the first connector 15 and the second connector 16.

The first connector 15 and the second connector 16 are located on the same side of the first electrode assembly 13 and the second electrode assembly 14 in the second direction Z, so that the positive and negative electrodes of the battery cell 10 are located on the same side of the battery cell 10. Such a structure facilitates module formation of batteries 100 and series and parallel connection between battery cells 10.

According to some embodiments of the present application, in the third direction Y, the first tab 132 and the third tab 133 are located between the second tab 142 and the fourth tab 143, and the third direction Y is perpendicular to the first direction X and the second direction Z.

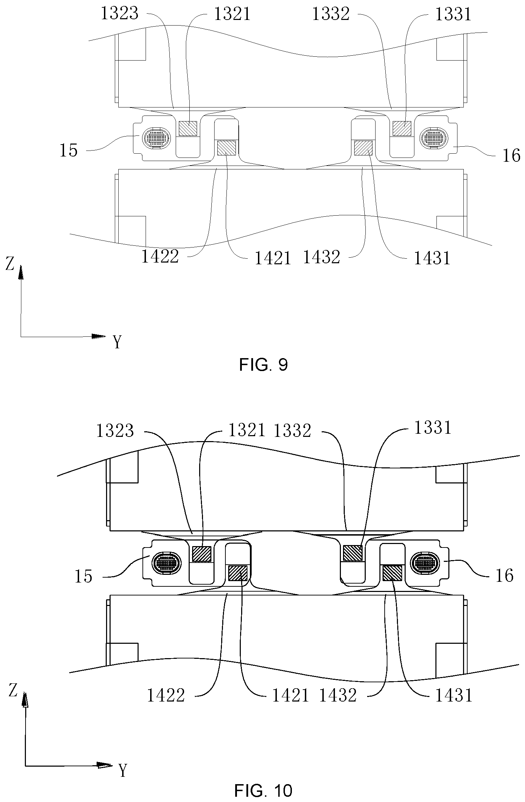

FIG. 9 shows a front view C of the first electrode assembly and the second electrode assembly in the unfolded state according to some embodiments of the present application. In the third direction Z, the first tab 132 and the third tab 133 of the first electrode assembly 13 are located between the second tab 142 and the fourth tab 143 of the second electrode assembly 14. In this case, the first tab 132 and the second tab 142 are misaligned and connected to the first connector 15, and the third tab 133 and the fourth tab 143 are misaligned and connected to the second connector 16.

According to some embodiments of the present application, in the third direction Y, the first tab 132, the second tab 142, the third tab 133 and the fourth tab 143 are arranged in sequence, and the third direction Y is perpendicular to the first direction X and the second direction Z.

FIG. 10 shows a front view D of the first electrode assembly and the second electrode assembly in the unfolded state according to some embodiments of the present application. The first tab 132, the second tab 142, the third tab 133, and the fourth tab 143 are sequentially arranged in the third direction Z, so that the first tab 132 and the second tab 142 are misaligned and connected to the first connector 15, and the third tab 133 and the fourth tab 143 are misaligned and connected to the second connector 16.

According to some embodiments of the present application, with reference to FIGs. 4 to 10, the present application provides a battery cell 10. The battery cell 10 includes a first electrode assembly 13, a second electrode assembly 14, a first connector 15, and a second connector 16, where the first electrode assembly 13 includes a first body 131, a first tab 132, and a third tab 133 with opposite polarity to the first tab 132; and the second electrode assembly 14 includes a second body 141, a second tab 142, and a fourth tab 143 with opposite polarity to the second tab 142. The first body 131 and the second body 141 are arranged in a first direction, the first connector 15 and the second connector 16 are located on the same side of the first electrode assembly 13 and the second electrode assembly 14 in a second direction, the second direction is perpendicular to the first direction, a welding portion 1321 of the first tab and a welding portion 1421 of the second tab are both connected to the first connector 15, and a welding portion 1331 of the third tab and a welding portion 1431 of the fourth tab are both connected to the second connector 16. In the first direction, a projection of the welding portion 1321 of the first tab and a projection of the welding portion 1421 of the second tab do not overlap, and a projection of the welding portion 1331 of the third tab and a projection of the welding portion 1431 of the fourth tab do not overlap.

According to the battery cell 10 in this embodiment of the present application, the projection of the welding portion 1321 of the first tab in the first direction X and the projection of the welding portion 1421 of the second tab in the first direction X do not overlap, and the projection of the welding portion 1331 of the third tab in the first direction X and the projection of the welding portion 1431 of the fourth tab in the first direction X do not overlap, that is, the welding portion 1321 of the first tab and the welding portion 1421 of the second tab are completely staggered in the first direction X, and the welding portion 1331 of the third tab and the welding portion 1431 of the fourth tab are completely staggered in the first direction X. This structure enables the welding portion 1321 of the first tab and the welding portion 1421 of the second tab to be staggered on the first connector 15 when connected to the first connector 15, and the welding portion 1331 of the third tab and the welding portion 1431 of the fourth tab to be staggered on the second connector 16 when connected to the second connector 16, to avoid mutual insertion of the first tab 132 and the second tab 142 and mutual insertion of the third tab 133 and the fourth tab 143, thereby reducing the risk of false welding of the tabs of the battery cell 10 and effectively improving the stability of performance of the battery 100.

Some embodiments of the present application provide a battery 100, including the battery cell 10 in any of the foregoing solutions.

Due to the characteristics of the battery cell 10 provided in the embodiments of the first aspect of the present application, the battery 100 in this embodiment of the second aspect of the present application also has good performance.

Some embodiments of the present application provide a power consumption apparatus, including the battery 100 in the foregoing solution, where the battery 100 is used for providing electrical energy.

The power consumption apparatus may be any of the foregoing devices or systems that use the battery 100.

It should be noted that the features in the embodiments of the present application may be combined with each other on a non-conflict basis.

Although the present application is described with reference to preferred embodiments, various improvements may be made and components may be replaced with equivalents without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A battery cell, comprising:
a first electrode assembly, comprising a first body and a first tab;
a second electrode assembly, comprising a second body and a second tab, wherein the first body and the second body are arranged in a first direction; and
a first connector, wherein the first connector is located on one side of the first electrode assembly and the second electrode assembly in a second direction, the second direction is perpendicular to the first direction, and a welding portion of the first tab and a welding portion of the second tab are both connected to the first connector,
wherein in the first direction, a projection of the welding portion of the first tab and a projection of the welding portion of the second tab do not overlap at least in part.

2. The battery cell according to claim 1, wherein in the first direction, the projection of the welding portion of the first tab and the projection of the welding portion of the second tab do not overlap.

3. The battery cell according to claim 2, wherein in the first direction, the projection of the welding portion of the first tab and the projection of the welding portion of the second tab are spaced.

4. The battery cell according to claim 3, wherein in a third direction, a distance between the welding portion of the first tab and the welding portion of the second tab is L, which satisfies L≥2 mm, wherein the third direction is perpendicular to the first direction and the second direction.

5. The battery cell according to any one of claims 1 to 4, wherein a maximum width of the welding portion of the first tab is smaller than that of a connecting portion of the first tab; and/or
a maximum width of the welding portion of the second tab is smaller than that of a connecting portion of the second tab.

6. The battery cell according to claim 5, wherein a ratio of the maximum width of the connecting portion of the first tab to the maximum width of the welding portion of the first tab is greater than 1.2; and/or
a ratio of the maximum width of the connecting portion of the second tab to the maximum width of the welding portion of the second tab is greater than 1.2.

7. The battery cell according to any one of claims 1 to 6, wherein in the first direction, a projection of a connecting portion of the first tab and a projection of a connecting portion of the second tab overlap at least in part.

8. The battery cell according to any one of claims 1 to 7, wherein the first tab further comprises a first bent portion, which connects a connecting portion of the first tab and the welding portion of the first tab; and/or
the second tab further comprises a second bent portion, which connects a connecting portion of the second tab and the welding portion of the second tab.

9. The battery cell according to any one of claims 1 to 8, wherein the first electrode assembly further comprises a third tab with opposite polarity to the first tab, and the second electrode assembly further comprises a fourth tab with opposite polarity to the second tab; and
the battery cell further comprises a second connector, the second connector is located on one side of the first electrode assembly and the second electrode assembly in the second direction, and a welding portion of the third tab and a welding portion of the fourth tab are both connected to the second connector.

10. The battery cell according to claim 9, wherein in the first direction, a projection of the welding portion of the third tab and a projection of the welding portion of the fourth tab do not overlap at least in part.

11. The battery cell according to claim 9 or 10, wherein in the first direction, a projection of a connecting portion of the third tab and a projection of a connecting portion of the fourth tab overlap at least in part.

12. The battery cell according to any one of claims 9 to 11, wherein the first connector and the second connector are located on the same side of the first electrode assembly and the second electrode assembly in the second direction.

13. The battery cell according to claim 12, wherein in a third direction, the first tab and the third tab are located between the second tab and the fourth tab, and the third direction is perpendicular to the first direction and the second direction.

14. The battery cell according to claim 12, wherein the first tab, the second tab, the third tab, and the fourth tab are sequentially arranged in a third direction, and the third direction is perpendicular to the first direction and the second direction.

15. A battery, comprising the battery cell according to any one of claims 1 to 14.

16. A power consumption apparatus, comprising the battery according to claim 15, wherein the battery is configured for providing electrical energy.
